# EUROPÄISCHE PATENTSCHRIFT

(11) **EP 1 375 266 B1**
(45) Veröffentlichungstag und Bekanntmachung des Hinweises auf die Patenterteilung: **14.02.2007**
(21) Anmeldenummer: 02024890.2
(22) Anmeldetag: 08.11.2002
(51) Int. Cl.: B60R 21/34

(54) **Vorrichtung zum Personenaufprallschutz für ein Kraftfahrzeug**
Device for protection of persons in case of a collision with a vehicle
Dispositif de protection de personnes en cas d'impact avec un véhicule

(30) Priorität: 09.11.2001 DE 10154693
(43) Veröffentlichungstag der Anmeldung: 02.01.2004
(73) Patentinhaber: ACTS-Advanced Car Technology Systems GmbH & Co.KG, 63877 Sailauf (DE)
(72) Erfinder: Schreurs, Antoine, 63773 Goldbach (DE); Goseberg, Frank, 63741 Aschaffenburg (DE); Schmidt, Werner, 63755 Alzenau (DE); Ros, Manel Edo, 63739 Aschaffenburg (DE)
(74) Vertreter: Pfiz, Thomas

(56) Entgegenhaltungen:
- EP-A- 0 926 018
- DE-A- 19 706 878
- DE-A- 19 712 961
- DE-U- 20 105 884

## Beschreibung

Die Erfindung betrifft eine Vorrichtung zum Personenaufprallschutz für ein Kraftfahrzeug mit einem mindestens eine zwischen jeweiligen Anschlußteilen der Karosserie und der Fronthaube des Kraftfahrzeugs auslösbare Hubfeder umfassenden Aufstellmechanismus zum vorzugsweise frontscheibenseitigen Aufstellen der Fronthaube aus der Schließstellung in eine angehobene Kollisionsstellung.

Vorrichtungen dieser Art, wie sie aus der DE 19712961 A bekannt sind, schaffen im Fall einer Fußgängerkollision durch Anheben der deformierbaren Fronthaube einen vergrößerten Deformationsbereich gegenüber der steifen Unterstruktur, insbesondere dem Motorblock, um so das Verletzungsrisiko für die aufprallende Person herabzusetzen. Dabei ist es bekannt, vorgespannte Federkolben als Energiespeicher für das Aufstellen der Fronthaube zu nutzen, wobei die Federbewegung uniaxial in einem Führungszylinder erfolgt. Zum Auslösen der vorgespannten Federn wurden Riegel vorgeschlagen, die über elektromagnetisch arbeitende Einheiten entsperrt werden. Der Federkolben dient dabei nur als Stellglied für die Fronthaube, während der Aufprall in erster Linie durch die Haubendeformation gedämpft wird. Weiter ist problematisch, daß auftretende Schwingungen der Fronthaube nur schlecht abgeleitet werden.

Ausgehend hiervon liegt der Erfindung die Aufgabe zugrunde, die vorgenannten Nachteile zu vermeiden und eine verbesserte Sicherheitsvorrichtung zu schaffen, womit sich das Verletzungsrisiko bei einem Personenaufprall weiter minimieren läßt.

Zur Lösung dieser Aufgabe wird die in den unabhängigen Patentansprüchen jeweils angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Hubfeder zugleich richtungsunabhängig als Dämpfungsfeder zu nutzen. Dementsprechend wird erfindungsgemäß vorgeschlagen, daß die mechanische Hubfeder im ausgelösten Zustand unter Einleitung von Querkräften durch die Fronthaube in einem seitlichen Ausweichbereich quer zu ihrem Hubweg frei von Führungsmitteln federnd ausbiegbar ist. Damit wird eine erhöhte Bewegungsfreiheit der Fronthaube in der Kollisionsstellung erreicht, wobei durch die Federbiegung Eigenschwingungen der Fronthaube effektiv gedämpft und die beim Personenaufprall auftretenden Kräfte in unterschiedliche Richtungen abgeleitet werden können. Die Hubfedern wirken zusätzlich zu der Deformation der Haube energieabsorbierend, und es können unterschiedlich große Verkehrsteilnehmer unter Berücksichtigung verschiedener Auftreffwinkel verbessert aufgefangen werden.

Eine bevorzugte Ausführung sieht vor, daß die vorgespannte Hubfeder durch eine vorzugsweise mit den Anschlußteilen verbindbare Vorspanneinheit unter Vorspannung gehalten ist. Dies läßt sich vorteilhaft dadurch realisieren, daß die Vorspanneinheit einen die als Schraubenfeder ausgeführte Hubfeder axial durchgreifenden Spannschaft und stirnseitig an dem Spannschaft angeordnete, die Hubfeder endseitig abstützende Stützteller aufweist. Eine weitere Verbesserung wird dadurch erreicht, daß die Hubfeder lose zwischen den Stütztellern eingespannt ist.

Zur Montagevereinfachung wird vorgeschlagen, daß die Vorspanneinheit bei vorgespannter Hubfeder über lösbare Verbindungsmittel, insbesondere über eine Schraubverbindung und/oder einen Formschluß mit den Anschlußteilen verbindbar ist.

Um die Fronthaube in der Ruhe- bzw. Schließstellung lagerichtig zu halten, ist es von Vorteil, wenn das haubenseitige Anschlußteil an einem karosseriefest angeordneten Halteteil über mindestens ein Eingriffsglied in der vorgesehenen Montageposition formschlüssig gesichert ist, wobei der Formschluß in Hubrichtung der Hubfeder frei lösbar ist.

Eine besonders bevorzugte Ausführung sieht vor, daß die Vorspanneinheit durch eine pyrotechnisch arbeitende Schnelltrennvorrichtung zur Freigabe der Hubfeder auftrennbar ist, um so die erforderlichen kurzen Reaktionszeiten einhalten zu können. Dabei ist es günstig, wenn die Schnelltrennvorrichtung ein vorzugsweise als Schraube ausgebildetes Verbindungselement zur Verbindung zweier Bauteile der Vorspanneinheit und eine pyrotechnische Sprengeinheit zum Trennen des verbindungselements über einen vorzugsweise durch eine Sollbruchstelle definierten Querschnitt unter Lösen der Bauteileverbindung aufweist.

Um den Montageablauf zu verbessern und die Handhabungssicherheit zu erhöhen, ist es von besonderem Vorteil, wenn die Sprengeinheit als gesondertes Einsatzteil in eine Aufnahmekammer des vormontierten Verbindungselements nachträglich einsetzbar ist.

Um eine Vormontage zu erleichtern, ist ein Federgehäuse zur Aufnahme der Hubfeder vorgesehen. Um eine Begrenzung übermäßiger Bewegungsamplituden sicherzustellen, ist es von Vorteil, wenn das Federgehäuse vorzugsweise über eine halbschalige Gehäusewandung einen seitlichen Auslenkbereich für die Federbiegung begrenzt. Eine weitere Verbesserung ergibt sich dadurch, daß das mit der Hubfeder bestückte Federgehäuse als Hubmodul unter der Fronthaube des Kraftfahrzeugs karosseriefest montierbar ist. Alternativ dazu ist es auch möglich, daß das Federgehäuse durch eine in einem Karosserieteil, vorzugsweise in einem Längsträger des Kraftfahrzeugs ausgebildete Aufnahmepartie gebildet ist.

Zur verbesserten Fixierung der Fronthaube in der Schließstellung ist es von Vorteil, wenn das Federgehäuse einen nach oben offenen Durchbruch für den Durchgriff der Hubfeder aufweist und das haubenseitige Anschlußteil über dem Durchbruch außerhalb des Federgehäuses angeordnet ist.

Vorteilhafterweise ist der Hubweg der Hubfeder nach oben durch einen vorzugsweise aus einem Elastomermaterial bestehenden Endanschlag begrenzt.

Eine weitere vorteilhafte Ausführung sieht vor, daß die Hubfeder als Druckfeder, vorzugsweise als zylindrische Schraubendruckfeder ausgebildet ist. Damit können Biegemomente durch seitliches Verkippen der Federwindungen günstig aufgenommen werden. Für einen höheren Federhub ist es günstig, wenn die Hubfeder einen rechteckigen Drahtquerschnitt aufweist. Alternativ ist es auch möglich, dass die Hubfeder durch eine mit Gas beaufschlagbare und dabei expandierbare Gasfeder gebildet ist.

Um die Fronthaube im Normalbetrieb betätigen zu können, ist an dem Anschlußteil der Fronthaube eine Scharniereinrichtung mit in Fahrzeugquerrichtung verlaufender Schwenkachse angeordnet.

Zur selbsttätigen Auslösung des Aufstellmechanismus ist eine im Kollisionsfall mit einem Fußgänger ansprechende und die Freigabe der Hubfeder auslösende Sensoreinrichtung vorgesehen.

Vorteilhafterweise weist der Aufstellmechanismus zwei in den rückseitigen Eckbereichen der Fronthabe angeordnete Hubfedern auf, so daß ein günstiger Aufstellwinkel der Fronthaube erreicht wird.

Ein weiterer Erfindungsaspekt liegt darin, daß der Federhub durch ein das der Fronthaube zugewandte Federende der Hubfeder mit einer karosseriefesten Halterung verbindendes, in eine Strecklage ausziehbares Hubbegrenzungsmittel begrenzbar ist. Dadurch kann eine Restfederkraft eingestellt werden, die auf den zu erwartenden Aufprall, insbesondere Kopfaufprall abgestimmt ist, so daß kontrolliert Bewegungsenergie aufgenommen werden kann. Vorteilhafterweise ist dabei der Federhub durch eine vorgegebene Ausziehlänge des biegeweichen oder biegeschlaffen Hubbegrenzungsmittels definiert.

Eine weitere bevorzugte Ausführung sieht einen in Hubrichtung spannbaren Fanggurt als Hubbegrenzungsmittel vor. Die verbleibende Vorspannkraft der Feder lässt sich also über die Gurtlänge einstellen. Zudem wird die Hubfeder im ausgelösten Zustand durch den Fanggurt gesichert.

Vorteilhafterweise besitzt der Fanggurt mindestens einen in Falten gelegten Ausziehabschnitt, wobei die Gurtfalten durch unter der Vorspannkraft der Hubfeder lösbare Verbindungsmittel gegeneinander gehalten sind. Dadurch kann die Federentfaltung gesteuert werden, um ein Nachschwingen der Fronthaube im ausgelösten Zustand weiter zu minimieren.

Gemäß einer weiteren vorteilhaften Ausgestaltung ist der Fanggurt vorzugsweise über eine die Hubfeder endseitig abstützende Stützplatte über das fronthaubenseitige Federende geführt und an seinen Gurtenden karosseriefest fixierbar Ein weitere funktionaler Vorteil wird dadurch erreicht, daß die Stützplatte unter Zwischenklemmen des Fanggurts mit dem fronthaubenseitigen Anschlußteil vorzugsweise über Schrauben fest verbindbar ist.

Ein weiterer besonders bevorzugter Erfindungsaspekt sieht eine Reversiervorrichtung zum mindestens teilweisen Rückführen der ausgelösten Hubfeder in die vorgespannte Ausgangslage vor. Damit ist zumindest ein Notbetrieb für eine Werkstattfahrt möglich, und es kann gegebenenfalls eine Sichtbehinderung durch die aufgestellte Fronthaube wieder beseitigt werden.

Um ein Spannen der Hubfeder zu ermöglichen, ist es vorteilhaft, wenn die Reversiervorrichtung mindestens eine die karosseriefeste Halterung des Fanggurts bildende Wickelwelle zum Aufwickeln des Fanggurts aufweist.

Dies kann vorteilhafterweise selbsttätig dadurch erfolgen, daß die Reversiervorrichtung einen vorzugsweise über Getriebemittel angekoppelten Antriebsmotor aufweist.

Ein weiterer Vorteil wird dadurch erreicht, daß der Antriebsmotor über die Sensoreinrichtung nach einem Kollisionsfall selbsttätig ansteuerbar ist. Damit kann vor allem in einem kurzen Zeitintervall nach einer Kollision eine Sichtbehinderung durch die Fronthaube aufgehoben werden, um das Fahrzeug sicher zum Stillstand zu bringen.

Zur Verringerung von Eigenschwingungen der Fronthaube im Kollisionsfall ist es von besonderem Vorteil, wenn die Hubfeder im ausgelösten Zustand als Dämpfungsfeder durch die Fronthaube komprimierbar ist.

Der Erfindungsgegenstand umfaßt ein Kraftfahrzeug mit einer erfindungsgemäßen Personenaufprallschutzvorrichtung.

Im folgenden wird die Erfindung anhand der in der Zeichnung in schematischer Weise dargestellten Ausführungsbeispiele näher erläutert. Es zeigen
- Fig. 1 und 2: ein mit einem Aufstellmechanismus für die Fronthaube zum Personenaufprallschutz bestücktes Kraftfahrzeug in einer ausschnittsweisen Seitenansicht bei geschlossener und aufgestellter Fronthaube;
- Fig. 3: zwei in den rückseitigen Eckbereichen der Fronthaube angeordnete Hubmodule des Aufstellmechanismus in der Draufsicht auf den Frontbereich des Kraftfahrzeugs nach Fig. 1;
- Fig. 4 und 5: einen Vertikalschnitt durch ein Hubmodul im vorgespannten und ausgelösten Zustand einer Hubfeder;
- Fig. 6 und 7: eine weitere Ausführungsform eines Hubmoduls in perspektivischer Ansicht und im Vertikalschnitt.

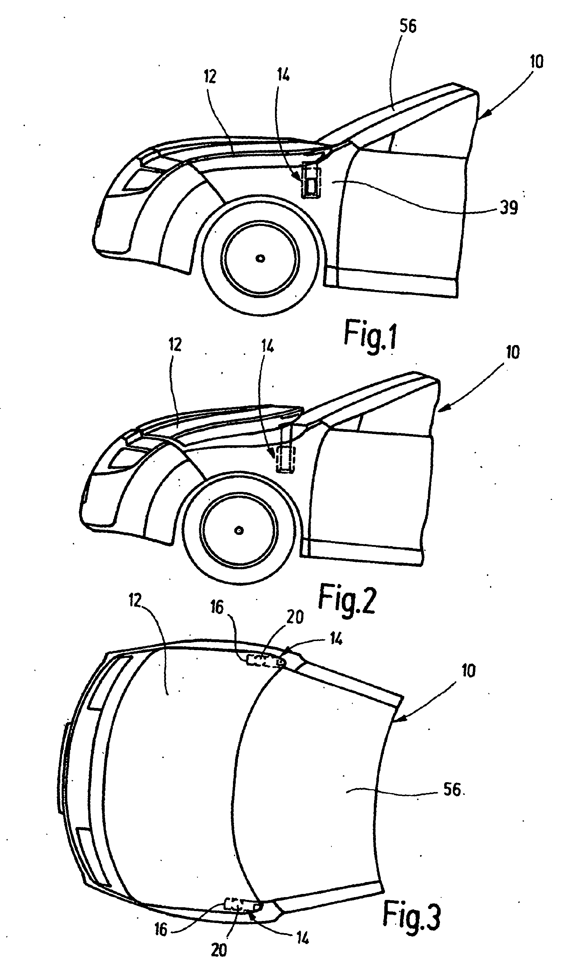

Die in der Zeichnung dargestellte Personenaufprallschutzvorrichtung für ein Kraftfahrzeug 10 ermöglicht ein frontscheibenseitiges Aufstellen bzw. Aufschwenken der Fronthaube 12 im Kollisionsfall mit einem Fußgänger. Sie umfaßt zu diesem Zweck einen Aufstellmechanismus 14 mit zwei in den rückseitigen Eckbereichen der Fronthaube 12 angeordneten Hubmodulen 16, welche jeweils eine durch eine Vorspanneinheit 18 unter Vorspannung gehaltene Hubfeder 20 aufweisen (Fig. 1 bis 3).

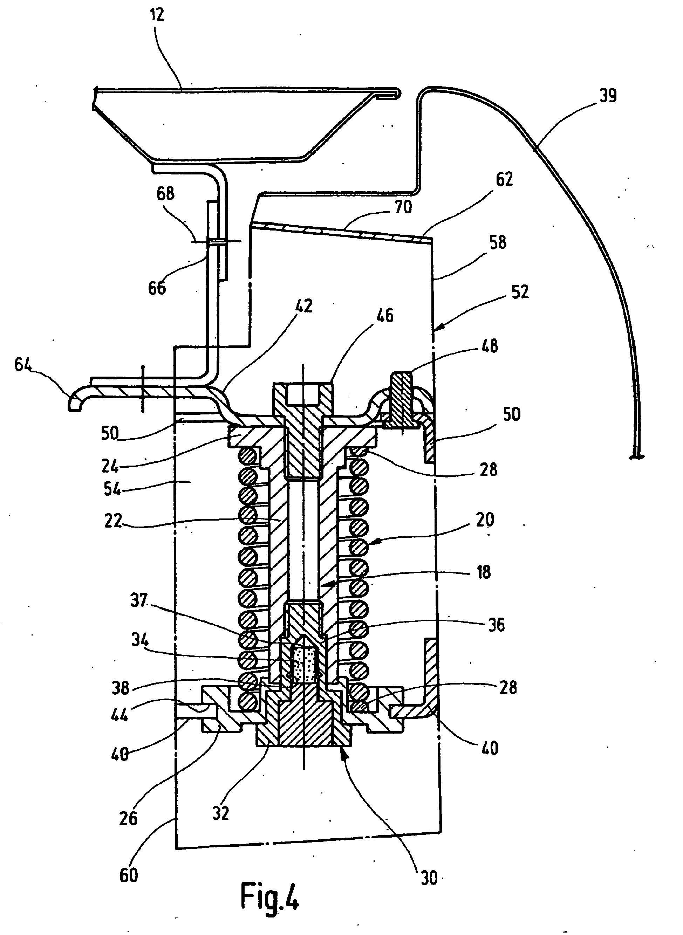

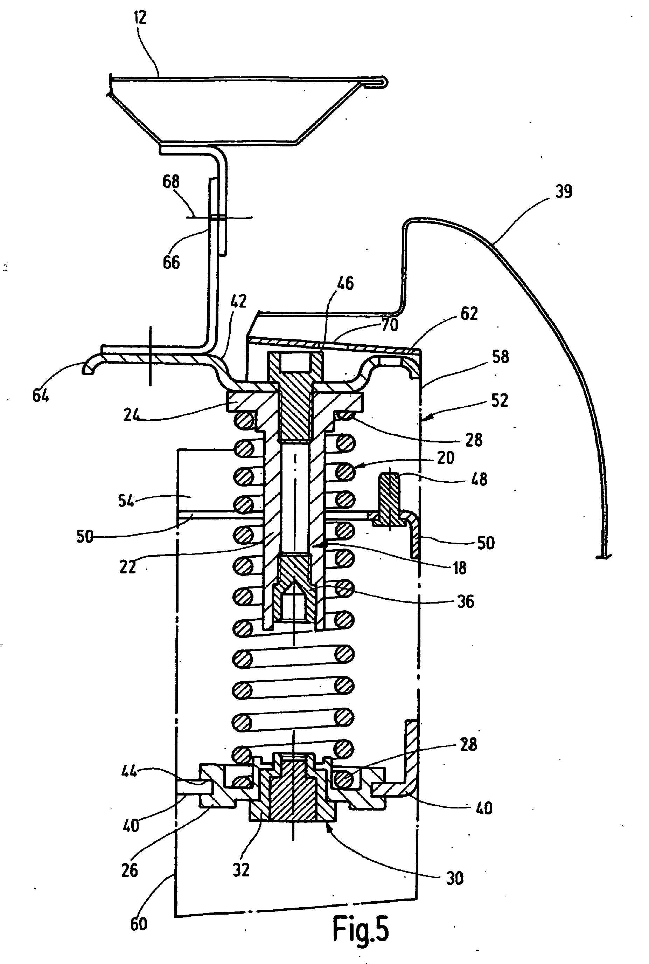

Wie in Fig. 4 und 5 gezeigt, sind die Hubfedern 20 als zylindrische Schraubendruckfedern ausgebildet, die über einen vorgegebenen vertikalen Feder- bzw. Hubweg unter Anheben der Fronthaube 12 entspannbar sind. Im ausgelösten Zustand sind die Hubfedern 20 bei Querbeanspruchung bzw. Knickbelastung durch die Fronthaube 12 quer zu ihrem Hubweg frei von Führungsmitteln allseitig ausbiegbar, wobei die Federwindungen seitlich gegeneinander verkippen.

Die Vorspanneinheit 18 umfaßt einen die Hubfeder 20 axial durchgreifenden Spannschaft 22 und zwei stirnseitige Stützteller 24, 26, an denen die Federenden 28 in axialer Richtung lose abgestützt sind. Während der obere Stützteller 24 einstückig an dem Spannschaft 22 angeformt ist, läßt sich der untere Stützteller 26 als gesondertes Bauteil über eine pyrotechnisch arbeitende Schnelltrennvorrichtung 30 unter Einschluß der vorgespannten Hubfeder 20 mit dem Spannschaft 22 verbinden.

Die Schnelltrennvorrichtung 30 weist eine Trennschraube 32 und einen darin befindlichen Sprengeinsatz 34 auf. Die Trennschraube 32 läßt sich unter kopfseitiger Abstützung an dem Stützteller 26 mit einem endseitigen Gewindeabschnitt ihres axial abgestuften Schafteils 36 in ein korrespondierendes Innengewinde des hohlzylindrischen Spannschafts 22 einschrauben. Der hohle Schaftteil 36 ist mit einer umlaufenden Innenkerbe 38 versehen, die bei Zündung des Sprengeinsatzes 34 als Sollbruchstelle wirkt. Aus Sicherheitsgründen ist es möglich, den Sprengeinsatz 34 erst nachträglich nach dem Karosserieeinbau der Hubeinheit 16 in den Hohlraum 37 der Trennschraube 32 einzusetzen.

Zur Halterung der aus Hubfeder 20 und Vorspanneinheit 18 gebildeten energiespeichernden Einrichtung zwischen der Karosserie 39 und der Motorhaube 12 des Fahrzeugs 10 sind jeweilige Anschlußteile 40, 42 vorgesehen. Das karosserieseitige Anschlußteil 40 ist als halbringförmiger Tragflansch ausgebildet, in welchen der untere Stützteller 26 über eine umlaufende Umfangsnut 44 in radialer Richtung formschlüssig einsetzbar und dabei in Hubrichtung der Hubfeder 20 gesichert ist. Das haubenseitige Anschlußteil 42 läßt sich mittels einer Durchsteckschraube 46 stirnseitig auf dem oberen Stützteller 24 befestigen. Um eine Sicherung in der Schließstellung gegen horizontale Querverlagerung zu gewährleisten, steht das haubenseitige Anschlußteil 42 über mindestens einen vertikal ausgerichteten Sicherungsstift 48 mit einem karosseriefest angeordneten halbringförmigen Halteflansch 50 in formschlüssigem Eingriff, wobei der Formschluß in Hubrichtung der Hubfeder 20 frei lösbar ist. Auf diese Weise läßt sich das haubenseitige Anschlußteil 42 durch das Auslösen der Hubfeder 20 nach oben verstellen.

Zur Montagevereinfachung umfassen die Hubmodule 16 ein die vorgespannte Hubfeder 20 aufnehmendes Federgehäuse 52, das im Motorraum unter der Fronthaube 12 fest an der Karosserie 39 montierbar ist. Der Tragflansch 40 und der Halteflansch 50 sind darin im gegenseitigen vertikalen Abstand befestigt und somit mittelbar karosseriefest fixierbar, wobei eine komplette Vorbestückung des Hubmoduls 16 möglich ist. Alternativ ist es auch denkbar, daß das Federgehäuse 52 durch eine in einem Karosserie- bzw. Fahrzeugteil, vorzugsweise einem Längsträger ausgebildete Aufnahmepartie gebildet ist.

Das Federgehäuse 52 begrenzt einen seitlichen Ausweich- bzw. Auslenkbereich 54 für die Federbiegung, so daß im Kollisionsfall keine unerwünscht großen Seitenbewegungen der Fronthaube 12 vor allem in Richtung der Frontscheibe 56 auftreten können. Zu diesem Zweck ist eine im Querschnitt halbschalige, insbesondere trapezförmige Gehäusewandung 58 vorgesehen, deren Öffnung 60 in Fahrzeugquerrichtung zum Motorraum hin weist. Zur Begrenzung des vertikalen Hubwegs dient ein Endanschlag 62, der zur Aufpralldämpfung aus einem Elastomermaterial bestehen kann.

Ein aus dem Federgehäuse 52 seitlich herausragender Ausleger 64 des Anschlußteils 42 ermöglicht die Lagerung der Fronthaube 12 über ein Scharnier 66. Dieses besitzt eine in Fahrzeugquerrichtung verlaufende Schwenkachse 68, um welche die Fronthaube 12 bei geöffnetem frontseitigem Haubenschloß für den Zugriff zum Motorraum aufschwenkbar ist.

Um den Abstand zwischen dem haubenseitigen Anschlußteil 42 und der Fronthaube 12 und damit auch die Einbautoleranzen zu verringern, ist es denkbar, die Hubfeder 20 durch einen nicht gezeigten Durchbruch in der oberen Wand 70 des Federgehäuses 52 hindurchtreten zu lassen. In diesem Fall wäre das Anschlußteil 42 über dem Durchbruch außerhalb des Federgehäuses 52 angeordnet, so daß sich der Abstand zu der Fronthaube 12 zumindest um den Betrag des Federhubs verringert.

Im Kollisionsfall mit einem Fußgänger, der durch eine nicht gezeigte Sensoreinrichtung erfaßt werden kann, wird in Sekundenbruchteilen der Sprengeinsatz 34 gezündet und die Hubfedern 20 der Hubmodule 16 unter Anheben der Fronthaube 12 entspannt (Fig. 5). Wie in Fig. 2 veranschaulicht, stellt sich dadurch die Fronthaube 12 im Bereich ihres frontscheibenseitigen Endes schräg auf, wobei das Haubenschloss die Schwenkachse bildet. Auf diese Weise wird ein zusätzlicher Deformationsbereich der Fronthaube 12 über den starren Motoreinbauten eröffnet. Durch die Möglichkeit des führungsfreien seitlichen Ausweichens der Hubfedern 20 können dabei Aufprallkräfte weitgehend richtungsunabhängig gedämpft werden, was zu einer deutlichen Verringerung des Verletzungsrisikos führt.

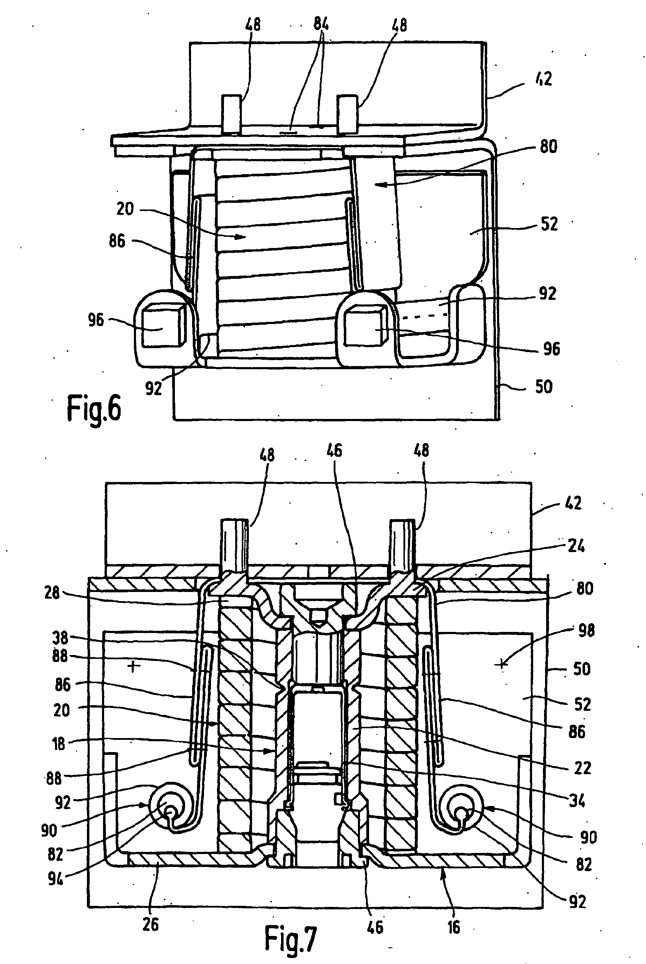

Bei dem in Fig. 6 und 7 gezeigten Ausführungsbeispiel sind gleiche bzw. funktionsgleiche Bauteile mit denselben Bezugszeichen wie zuvor beschrieben versehen. Ein besonderer Unterschied besteht darin, daß das fronthaubenseitige Federende 28 der Hubfeder 20 über einen im Auslösefall in Hubrichtung in eine Strecklage spannbaren und dabei als Hubbegrenzungsmittel wirkenden Fanggurt 80 mit einer karosseriefesten Halterung 82 verbunden ist. Der Fanggurt ist über eine die Hubfeder 20 endseitig abstützende Stützplatte 24 hinweg geführt, wobei die Stützplatte 24 mit dem haubenseitigen Anschlußteil 42 unter Zwischenklemmen des Fanggurts 80 verbindbar ist. Zu diesem Zweck sind an der Stützplatte nach oben abstehende Führungszapfen 48 als Montagehilfe vorgesehen, während eine auch in Z-Richtung starre Endverbindung mittels Schrauben 84 erreicht wird.

Der Fanggurt 80 weist seitlich der Hubfeder 20 verlaufende Ausziehabschnitte 86 auf, die in Falten gelegt sind und durch unter der Kraft der ausgelösten Hubfeder 20 aufreißbare Verbindungsmittel 88 gegeneinander gehalten sind.

Zum mindestens teilweisen Zurückstellen der Hubfeder in die Ausgangslage ist eine Reversiervorrichtung 90 vorgesehen. Diese umfaßt zwei Wickelwellen 92 zum Aufwickeln des Fanggurts, die zugleich die karosseriefeste Halterung 82 für die Gurtenden 94 bilden.

Die Wickelwellen 92 sind über Antriebsmittel 96 betätigbar. Dies kann im einfachsten Fall manuell erfolgen, während für eine selbsttätige Rückstellung ein nicht gezeigter Getriebemotor eingesetzt werden kann. Dadurch ist es möglich, die Rückstellung in einem kurzen Zeitfenster nach einem Kollisionsfall, beispielsweise innerhalb von 500 ms bis 1 s zu bewirken, so dass eine eventuelle Sichtbehinderung durch die Fronthaube noch im Fahrbetrieb rasch beseitigt wird.

Über den hohlzylindrischen Spannschaft bzw. Zuganker 22 der Vorspanneinheit 18 wird mittels Schraubverbindungen 46 eine starre Verbindung zwischen den Stützplatte 24, 26 hergestellt, wobei die Hubfeder 20 dazwischen vorgespannt ist. Der Sprengeinsatz 34 ist hier in den Innenraum des mit einer Umfangskerbe 38 als Sollbruchstelle versehenen Spannschafts 22 eingesetzt. Dabei werden Gefahren in der Handhabung dadurch verringert, daß das Sprengvolumen erst bei der Endmontage durch die obere Schraube 46 abgeschlossen wird.

Im Produktionsprozeß des Kraftfahrzeugs wird das haubenseitige Anschlußteil 42 mit der daran gelagerten Fronthaube 12 zunächst über den karosseriefesten Winkelflansch 50 mittels nicht gezeigter Verbindungselemente produktionssicher gehalten. In einem späteren Montageschritt nach dem Lackiervorgang wird das den Sprengeinsatz 34 bereits enthaltende vorgefertigte Hubmodul 16 mit den Führungszapfen 48 in das Anschlußteil 42 eingesetzt und mittels Schrauben 98 fest an dem Winkelflansch 50 bzw. der Karosserie fixiert, so daß eine Abstützung der Hubfeder über das nach oben und seitlich weitgehend offene Federgehäuse 52 möglich ist. Danach wird das haubenseitige Anschlußteil 42 über die Schraubverbindungen 84 und den Spannschaft 22 für den Fahrbetrieb karosseriefest gehalten, während die provisorische Verbindung zu dem Winkelflansch 50 zumindest in Z-Richtung gelöst wird, um das Auslösen der Hubfeder zu ermöglichen. Auf dem Anschlußteil 42 kann ein nicht gezeigter Gummipuffer angeordnet sein, welcher eine direkte Krafteinleitung in die Fronthaube 12 auch bei vorhandenen Toleranzen ermöglicht.

## Patentansprüche

1. Vorrichtung zum Personenaufprallschutz für ein Kraftfahrzeug (10) mit einem mindestens eine zwischen jeweiligen Anschlußteilen (40,42) der Karosserie (39) und der Fronthaube (12) des Kraftfahrzeugs (10) auslösbare Hubfeder (20) umfassenden Aufstellmechanismus (14) zum vorzugsweise frontscheibenseitigen Aufstellen der Fronthaube (12) aus der Schließstellung in eine angehobene Kollisionsstellung, **dadurch gekennzeichnet, daß** die mechanische Hubfeder (20) im ausgelösten Zustand unter Einleitung von Querkräften durch die Fronthaube (12) in einem seitlichen Ausweichbereich (54) quer zu ihrem Hubweg frei von Führungsmitteln federnd ausbiegt.

2. Vorrichtung nach Anspruch 1, **dadurch gekennzeichnet, daß** die Hubfeder (20) vorgespannt ist.

3. Vorrichtung nach Anspruch 1 oder 2, **dadurch gekennzeichnet, daß** die Hubfeder (20) durch eine vorzugsweise mit den Anschlußteilen (40,42) verbindbare Vorspanneinheit (18) unter Vorspannung gehalten ist.

4. Vorrichtung nach einem der Ansprüche 1 bis 3, **dadurch gekennzeichnet, daß** die Vorspanneinheit (18) einen die als Schraubenfeder ausgeführte Hubfeder (20) axial durchgreifenden Spannschaft (22) und stirnseitig an dem Spannschaft (22) angeordnete, die Hubfeder (20) endseitig abstützende Stützteller (24,26) aufweist.

5. Vorrichtung nach Anspruch 4, **dadurch gekennzeichnet, daß** die Hubfeder (20) lose zwischen den Stütztellern (24,26) eingespannt ist.

6. Vorrichtung nach einem der Ansprüche 3 bis 5, **dadurch gekennzeichnet, daß** die Vorspanneinheit (18) bei vorgespannter Hubfeder (20) über lösbare Verbindungsmittel, insbesondere über eine Schraubverbindung (46) und/oder einen Formschluß (44) mit den Anschlußteilen (40,42) verbindbar ist.

7. Vorrichtung nach einem der Ansprüche 1 bis 6, **dadurch gekennzeichnet, daß** das haubenseitige Anschlußteil (42) in der Schließstellung an einem karosseriefest angeordneten Halteteil (50) über mindestens ein Eingriffsglied (48) in der vorgesehenen Montageposition formschlüssig gesichert ist, wobei der Formschluß in Hubrichtung der Hubfeder (20) frei lösbar ist.

8. Vorrichtung nach einem der Ansprüche 3 bis 7, **dadurch gekennzeichnet, daß** die Vorspanneinheit (18) durch eine pyrotechnisch arbeitende Schnelltrennvorrichtung (30) zur Freigabe der Hubfeder (20) auftrennbar ist.

9. Vorrichtung nach Anspruch 8, **dadurch gekennzeichnet, daß** die Schnelltrennvorrichtung (30) ein vorzugsweise als Schraube ausgebildetes Verbindungselement (32) zur Verbindung zweier Bauteile (22,26) der Vorspanneinheit (18) und eine pyrotechnische Sprengeinheit (34) zum Trennen des Verbindungselements über einen vorzugsweise durch eine Sollbruchstelle (38) definierten Querschnitt unter Lösen der Bauteileverbindung aufweist.

10. Vorrichtung nach Anspruch 9, **dadurch gekennzeichnet, daß** die Sprengeinheit (34) als gesondertes Einsatzteil in eine Aufnahmekammer (37) des vormontierten Verbindungselements (32) nachträglich einsetzbar ist.

11. Vorrichtung nach einem der Ansprüche 1 bis 10, **gekennzeichnet durch** ein Federgehäuse (52) zur Aufnahme der Hubfeder (20).

12. Vorrichtung nach Anspruch 11, **dadurch gekennzeichnet, daß** das Federgehäuse (52) vorzugsweise über eine halbschalige Gehäusewandung (58) einen seitlichen Auslenkbereich für die Federbiegung begrenzt.

13. Vorrichtung nach Anspruch 11 oder 12, **dadurch gekennzeichnet, daß** das mit der Hubfeder (20) bestückte Federgehäuse (52) als vormontiertes Hubmodul (16) unter der Fronthaube (12) des Kraftfahrzeugs (10) karosseriefest fixierbar ist.

14. Vorrichtung nach einem der Ansprüche 11 bis 13, **dadurch gekennzeichnet, daß** das Federgehäuse (52) durch eine in einem Karosserieteil, vorzugsweise in einem Längsträger des Kraftfahrzeugs (10) ausgebildete Aufnahmepartie gebildet ist.

15. Vorrichtung nach einem der Ansprüche 11 bis 14, **dadurch gekennzeichnet, daß** das Federgehäuse (52) einen nach oben offenen Durchbruch für den Durchgriff der Hubfeder (20) aufweist, und daß das haubenseitige Anschlußteil (42) über dem Durchbruch außerhalb des Federgehäuses (52) angeordnet ist.

16. Vorrichtung nach einem der Ansprüche 1 bis 15, **dadurch gekennzeichnet, daß** der Hubweg der Hubfeder (20) nach oben durch einen vorzugsweise aus einem Elastomermaterial bestehenden Endanschlag (62) begrenzt ist.

17. Vorrichtung nach einem der Ansprüche 1 bis 16, **dadurch gekennzeichnet, daß** die Hubfeder (20) als Druckfeder ausgebildet ist.

18. Vorrichtung nach einem der Ansprüche 1 bis 17, **dadurch gekennzeichnet, daß** die Hubfeder (20) als zylindrische Schraubendruckfeder vorzugsweise mit rechteckigem Drahtquerschnitt ausgebildet ist.

19. Vorrichtung nach einem der Ansprüche 1 bis 16, **dadurch gekennzeichnet, daß** die Hubfeder (20) durch eine mit Gas beaufschlagbare und dabei expandierbare Gasfeder, insbesondere einen Faltenbalg gebildet ist.

20. Vorrichtung nach einem der Ansprüche 1 bis 19, **dadurch gekennzeichnet, daß** an dem Anschlußteil (42) der Fronthaube (12) eine Scharniereinrichtung (66) mit in Fahrzeugquerrichtung verlaufender Schwenkachse (68) gelagert ist.

21. Vorrichtung nach einem der Ansprüche 1 bis 20, **gekennzeichnet durch** eine im Kollisionsfall mit einem Fußgänger ansprechende und die Freigabe der Hubfeder (20) auslösende Sensoreinrichtung.

22. Vorrichtung nach einem der Ansprüche 1 bis 21, **dadurch gekennzeichnet, daß** der Aufstellmechanismus (14) zwei in den rückseitigen Eckbereichen der Fronthabe angeordnete Hubfedern (20) aufweist.

23. Vorrichtung nach einem der Ansprüche 1 bis 22, **dadurch gekennzeichnet, daß** der Federhub durch ein das der Fronthaube zugewandte Federende der Hubfeder (20) mit einer karosseriefesten Halterung (82) verbindendes, in eine Strecklage ausziehbares Hubbegrenzungsmittel (80) begrenzbar ist.

24. Vorrichtung nach Anspruch 23, **dadurch gekennzeichnet, dass** der Federhub durch eine vorgegebene Ausziehlänge des biegeweichen oder biegeschlaffen Hubbegrenzungsmittels (80) definiert ist.

25. Vorrichtung nach Anspruch 23 oder 24, **dadurch gekennzeichnet, daß** das Hubbegrenzungsmittel durch einen in Hubrichtung der Hubfeder (20) spannbaren Fanggurt (80) gebildet ist.

26. Vorrichtung nach Anspruch 25, **dadurch gekennzeichnet, dass** der Fanggurt (80) mindestens einen in Falten gelegten Ausziehabschnitt (86) aufweist, wobei die Gurtfalten durch unter der Vorspannkraft der Hubfeder lösbare Verbindungsmittel (88) gegeneinander gehalten sind.

27. Vorrichtung nach Anspruch 25 oder 26, **dadurch gekennzeichnet, daß** der Fanggurt (80) vorzugsweise über eine die Hubfeder (20) endseitig abstützende Stützplatte (24) über das fronthaubenseitige Federende (28) geführt ist und an seinen Gurtenden (82) karosseriefest fixierbar ist.

28. Vorrichtung nach Anspruch 27, **dadurch gekennzeichnet, daß** die Stützplatte (24) unter Zwischenklemmen des Fanggurts (80) mit dem fronthaubenseitigen Anschlußteil (42) vorzugsweise über Schrauben (84) fest verbindbar ist.

29. Vorrichtung nach einem der Ansprüche 1 bis 28, **gekennzeichnet durch** eine Reversiervorrichtung (90) zum mindestens teilweisen Rückführen der ausgelösten Hubfeder (20) in die vorgespannte Ausgangslage.

30. Vorrichtung nach Anspruch 29, **dadurch gekennzeichnet, daß** die Reversiervorrichtung (90) mindestens eine die karosseriefeste Halterung des Fanggurts (80) bildende Wickelwelle (92) zum Aufwickeln des Fanggurts (80) aufweist.

31. Vorrichtung nach Anspruch 29 oder 30, **dadurch gekennzeichnet, daß** die Reversiervorrichtung (90) einen vorzugsweise über Getriebemittel angekoppelten Antriebsmotor aufweist.

32. Vorrichtung nach Anspruch 31, **dadurch gekennzeichnet, daß** der Antriebsmotor über die Sensoreinrichtung nach einem Kollisionsfall selbsttätig ansteuerbar ist.

33. Vorrichtung nach einem der Ansprüche 1 bis 32, **dadurch gekennzeichnet, daß** die Hubfeder (20) im ausgelösten Zustand als Dämpfungsfeder durch die Fronthaube (12) komprimierbar ist.

34. Kraftfahrzeug (10), **gekennzeichnet durch** eine Personenaufprallschutzvorrichtung nach einem der vorhergehenden Ansprüche.

## Claims

1. Device for the protection of persons in the event of a collision with a motor vehicle (10), with an elevating mechanism (14) comprising at least one triggerable lifting spring (20) between respective connecting parts (40, 42) of the body (39) and the front hood (12) of the motor vehicle (10) for preferably front windscreen-side elevation of the front hood (12) from the closed position into a raised collision position, **characterised in that**, in the triggered state, with introduction of transverse forces through the front hood (12), the mechanical lifting spring (20) resiliently bends outwards, free from guide means, in a lateral yielding region (54) transverse to its lifting distance.

2. Device according to claim 1, **characterised in that** the lifting spring (20) is pre-tensioned.

3. Device according to claim 1 or 2, **characterised in that** the lifting spring (20) is pretensioned by a pretensioning unit (18) that can preferably be connected to the connecting parts (40, 42).

4. Device according to any one of claims 1 to 3, **characterised in that** the pretensioning unit (18) comprises a support plate (24, 26) providing end support for the fixing shaft (22), which axially penetrates lifting springs (2) constructed as helical springs, and the lifting spring (20) arranged at the front-end face of the fixing shaft (22).

5. Device according to claim 4, **characterised in that** the lifting spring (20) is loosely fixed between the support plates (24, 26).

6. Device according to any one of claims 3 to 5, **characterised in that**, when the lifting spring (20) is pretensioned, the pretensioning unit (18) can be connected by releasable connection means, in particular by a screw connection (46) and/or interlocking (44), to the connecting parts (40, 42).

7. Device according to any one of claims 1 to 6, **characterised in that**, in the closed position, the hood-side connecting part (42) is secured with interlocking fit in the envisaged assembly position to a holding part (50), arranged so as to be secured to the body, by at least one engaging member (48), the interlocking being freely releasable in the lifting direction of the lifting spring (20).

8. Device according to any one of claims 3 to 7, **characterised in that** the pretensioning unit (18) can be separated by a pyrotechnically operating quick separation device (30) to release the lifting spring (20).

9. Device according to claim 8, **characterised in that** the quick separation device (30) comprises a connecting element (32), preferably constructed as a screw, for connecting two components (22, 26) of the pretensioning unit (18) and a pyrotechnic exploding unit (34) for separating the connection element across a cross-section that is preferably defined by a desired breaking point (38) while releasing the component connection.

10. Device according to claim 9, **characterised in that** the exploding unit (14) can be subsequently inserted as a separate insert in a receiving chamber (37) of the pre-assembled connecting element (32).

11. Device according to any one of claims 1 to 10, **characterised by** a spring housing (52) for receiving the lifting spring (20).

12. Device according to claim 11, **characterised in that** the spring housing (52) preferably limits a lateral deflection region for the bending of the spring via a shell-like housing wall (58).

13. Device according to claim 11 or 12, **characterised in that** the spring housing (52) fitted with the lifting spring (20) can be fixed, so as to be secured to the body, as a pre-assembled lifting module (16) under the front hood (12) of the motor vehicle (10).

14. Device according to any one of claims 11 to 13, **characterised in that** the spring housing (52) is formed by a receiving portion constructed in a body part, preferably in a longitudinal beam of the motor vehicle (10).

15. Device according to any one of claims 11 to 14, **characterised in that** the spring housing (52) comprises an aperture, which is open at the top, for penetration of the lifting spring (20), and **in that** the hood-side connecting part (42) is arranged above the aperture and outside of the spring housing (52).

16. Device according to any one of claims 1 to 15, **characterised in that** the lifting distance of the lifting spring (20) is limited at the top by an end stop (62) that is preferably made of an elastomeric material.

17. Device according to any one of claims 1 to 16, **characterised in that** the lifting spring (20) is constructed as a compression spring.

18. Device according to any one of claims 1 to 17, **characterised in that** the lifting spring (20) is constructed as a cylindrical helical compression spring, preferably with a rectangular wire cross-section.

19. Device according to any one of claims 1 to 16, **characterised in that** the lifting spring (20) is formed by a pneumatic spring, in particular a bellows, that can be loaded with gas and expanded in the process.

20. Device according to any one of claims 1 to 19, **characterised in that** a hinge device (66) with a swivel pin (68) extending in the transverse direction of the vehicle is mounted at the connecting part (42) of the front hood (12).

21. Device according to any one of claims 1 to 20, **characterised by** a sensor device that reacts in the event of a collision with a pedestrian and triggers release of the lifting spring (20).

22. Device according to any one of claims 1 to 21, **characterised in that** the elevating mechanism (14) comprises two lifting springs (20) arranged in the back corner regions of the front hood.

23. Device according to any one of claims 1 to 22, **characterised in that** the spring lift can be limited by a lift limiting means (80), extendable into an expanded position, connecting the end of the lifting spring (20) facing away from the front hood to a holding device (82) that is secured to the body.

24. Device according to claim 23, **characterised in that** the spring lift is defined by a predetermined extendable length of the flexible lift limiting means (80).

25. Device according to claim 23 or 24, **characterised in that** the lift limiting means is formed by a securing belt (80) that can be fixed in the lifting direction of the lifting spring (20).

26. Device according to claim 25, **characterised in that** the securing belt (80) comprises at least one folded extending portion (86), with the folds of the belt being held against each other by connection means (88) that can be released under the pretensioning force of the lifting spring.

27. Device according to claim 25 or 26, **characterised in that** the securing belt (80) is preferably guided over the front hood-side spring end (28) by a support plate (24) providing end support for the lifting spring (20), and can be fixed at its ends so as to be secured to the body.

28. Device according to claim 27, **characterised in that** the support plate (24) can be rigidly connected to the front hood-side connecting part (42) preferably by screws (84), while jamming the securing belt (80) therebetween.

29. Device according to any one of claims 1 to 28, **characterised by** a reversing device (90) for at least partially returning the triggered lifting spring (20) into the pretensioned starting position.

30. Device according to claim 29, **characterised in that** the reversing device (90) comprises at least one winding shaft (92), for winding the securing belt (80), which forms the securing belt (80) holding device that is secured to the body.

31. Device according to claim 29 or 30, **characterised in that** the reversing device (90) comprises a drive motor that is preferably coupled via gear means.

32. Device according to claim 31, **characterised in that** the drive motor can be automatically controlled via the sensor device following a collision.

33. Device according to any one of claims 1 to 32, **characterised in that**, in the triggered state, the lifting spring (20), as an absorbing spring, can be compressed by the front hood (12) .

34. Motor vehicle (10), **characterised by** a device for the protection of persons in the event of a collision according to any one of the preceding claims.

## Revendications

1. Dispositif de protection de personnes en cas de collision pour un véhicule automobile (10) avec un mécanisme de soulèvement (14) comprenant au moins un ressort de levage (20) pouvant être détendu entre des éléments de raccordement respectifs (40, 42) de la carrosserie (39) et le capot avant (12) du véhicule automobile (10) afin de faire passer le capot avant (12) de préférence du côté du pare-brise, d'une position de fermeture à une position de collision soulevée, **caractérisé en ce que** le ressort mécanique de levage (20), dans l'état détendu et sous l'effet de forces transversales introduites par le capot avant (12), fléchit de façon élastique, transversalement par rapport à sa longueur de course, dans une zone de déviation latérale (54) sans moyens de guidage.

2. Dispositif selon la revendication 1, **caractérisé en ce que** le ressort de levage (20) est précontraint.

3. Dispositif selon la revendication 1 ou 2, **caractérisé en ce que** le ressort de levage (20) est maintenu en précontrainte par une unité de précontrainte (18) pouvant être reliée de préférence aux éléments de raccordement (40, 42).

4. Dispositif selon l'une quelconque des revendications 1 à 3, **caractérisé en ce que** l'unité de précontrainte (18) comprend un corps de serrage (22) pénétrant axialement dans le ressort de levage (20) réalisé comme un ressort à boudin, et des plateaux d'appui (24, 26) disposés frontalement sur le corps de serrage (22), maintenant le ressort de levage (20) au niveau de ses extrémités.

5. Dispositif selon la revendication 4, **caractérisé en ce que** le ressort de levage (20) est encastré de façon amovible entre les plateaux d'appui (24, 26).

6. Dispositif selon l'une quelconque des revendications 3 à 5, **caractérisé en ce que** l'unité de précontrainte (18) peut être reliée, lorsque le ressort de levage (20) est précontraint, aux éléments de raccordement (40, 42), par l'intermédiaire de moyens d'assemblage amovibles, en particulier par l'intermédiaire d'un assemblage par vis (46) et/ou d'un engagement positif (44).

7. Dispositif selon l'une quelconque des revendications 1 à 6, **caractérisé en ce que** l'élément de raccordement (42) situé du côté du capot est fixé, dans la position de fermeture, par engagement positif dans la position de montage prévue, sur un élément de maintien (50) disposé de façon solidaire de la carrosserie, par l'intermédiaire d'au moins un élément d'engagement (48), l'engagement positif étant librement amovible dans la direction de la course du ressort de levage (20).

8. Dispositif selon l'une quelconque des revendications 3 à 7, **caractérisé en ce que** l'unité de précontrainte (18) peut être sectionnée par un dispositif de séparation rapide (30) fonctionnant de manière pyrotechnique afin de libérer le ressort de levage (20).

9. Dispositif selon la revendication 8, **caractérisé en ce que** le dispositif de séparation rapide (30) présente un élément d'assemblage (32) conçu de préférence comme une vis afin d'assembler deux éléments constitutifs (22, 26) de l'unité de précontrainte (18) et une unité pyrotechnique explosive (34) pour sectionner l'élément d'assemblage selon un sectionnement transversal défini de préférence par une zone d'amorce de rupture (38) en libérant l'assemblage des éléments constitutifs.

10. Dispositif selon la revendication 9, **caractérisé en ce que** l'unité explosive (34) peut être introduite ultérieurement comme élément rapporté indépendant dans une chambre réceptrice (37) de l'élément d'assemblage (32) préassemblé.

11. Dispositif selon l'une quelconque des revendications 1 à 10, **caractérisé par** un logement de ressort (52) destiné à loger le ressort de levage (20).

12. Dispositif selon la revendication 11, **caractérisé en ce que** le logement de ressort (52) limite de préférence une zone latérale de déviation pour la flexion du ressort par l'intermédiaire d'une paroi du logement (58) en forme de demi-coque.

13. Dispositif selon la revendication 11 ou 12, **caractérisé en ce que** le logement de ressort (52) équipé du ressort de levage (20) peut être fixé de façon solidaire à la carrosserie comme module de levage (16) préassemblé sous le capot avant (12) du véhicule automobile (10).

14. Dispositif selon l'une quelconque des revendications 11 à 13, **caractérisé en ce que** le logement de ressort (52) est formé par une partie formant logement conçue dans une partie de la carrosserie, de préférence dans un longeron du véhicule automobile (10).

15. Dispositif selon l'une quelconque des revendications 11 à 14, **caractérisé en ce que** le logement de ressort (52) présente un passage ouvert vers le haut pour accéder au ressort de levage (20), et **en ce que** l'élément de raccordement (42) situé du côté du capot est disposé au-dessus du passage, en dehors du logement du ressort (52).

16. Dispositif selon l'une quelconque des revendications 1 à 15, **caractérisé en ce que** la longueur de course du ressort de levage (20) est limitée vers le haut par une butée de fin de course (62) se composant de préférence d'un matériau élastomère.

17. Dispositif selon l'une quelconque des revendications 1 à 16, **caractérisé en ce que** le ressort de levage (20) est conçu comme un ressort de compression.

18. Dispositif selon l'une quelconque des revendications 1 à 17, **caractérisé en ce que** le ressort de levage (20) est conçu comme un ressort de compression à boudin cylindrique, de préférence avec un fil métallique de section rectangulaire.

19. Dispositif selon l'une quelconque des revendications 1 à 16, **caractérisé en ce que** le ressort de levage (20) est formé d'un amortisseur pneumatique pouvant être alimenté avec du gaz et de ce fait expansible, en particulier d'un soufflet plissé.

20. Dispositif selon l'une quelconque des revendications 1 à 19, **caractérisé en ce qu'**un dispositif de charnière (66) avec un axe de pivotement (68) orienté dans le sens transversal du véhicule est logé sur l'élément de raccordement (42) du capot avant (12).

21. Dispositif selon l'une quelconque des revendications 1 à 20, **caractérisé par** un dispositif de capteur sensible en cas de collision avec un piéton et provoquant la détente du ressort de levage (20).

22. Dispositif selon l'une quelconque des revendications 1 à 21, **caractérisé en ce que** le mécanisme de soulèvement (14) présente deux ressorts de levage (20) disposés dans les zones de coins arrière du capot avant.

23. Dispositif selon l'une quelconque des revendications 1 à 22, **caractérisé en ce que** la course du ressort peut être limitée par un moyen de limitation de la course (80) assemblant l'extrémité du ressort de levage (20) dirigée vers le capot avant avec un support (82) solidaire de la carrosserie et pouvant s'étendre dans une position d'allongement.

24. Dispositif selon la revendication 23, **caractérisé en ce que** la course du ressort est définie par une longueur d'allongement prédéterminée du moyen de limitation de la course (80) souple ou flexible.

25. Dispositif selon la revendication 23 ou 24, **caractérisé en ce que** le moyen de limitation de la course est formé par une sangle d'arrêt (80) pouvant être tendue dans le sens de la course du ressort de levage (20).

26. Dispositif selon la revendication 25, **caractérisé en ce que** la sangle d'arrêt (80) présente au moins un segment d'allongement (86) disposé en plis, les plis de la sangle étant maintenus l'un contre l'autre par des moyens d'assemblage (88) pouvant être déchirés sous la force de précontrainte du ressort de levage.

27. Dispositif selon la revendication 25 ou 26, **caractérisé en ce que** la sangle d'arrêt (80) est guidée, de préférence par l'intermédiaire d'un plateau d'appui (24) supportant le ressort de levage (20) au niveau de ses extrémités, au-dessus de l'extrémité du ressort (28) du côté du capot avant, et peut être fixée de façon solidaire à la carrosserie au niveau de ses extrémités (82).

28. Dispositif selon la revendication 27, **caractérisé en ce que** le plateau d'appui (24) peut être assemblé fermement, de préférence à l'aide de vis (84), à l'élément de raccordement (42) situé du côté du capot, tout en serrant la sangle d'arrêt (80) intercalée entre eux.

29. Dispositif selon l'une quelconque des revendications 1 à 28, **caractérisé par** un dispositif réversible (90) destiné à ramener au moins partiellement le ressort de levage (20) détendu dans sa position de précontrainte initiale.

30. Dispositif selon la revendication 29, **caractérisé en ce que** le dispositif réversible (90) présente au moins un arbre d'enroulement (92) formant le dispositif de fixation de la sangle d'arrêt (80) solidaire de la carrosserie, pour enrouler la sangle d'arrêt (80).

31. Dispositif selon la revendication 29 ou 30, **caractérisé en ce que** le dispositif réversible (90) présente un moteur d'entraînement accouplé de préférence par l'intermédiaire de moyens de transmission.

32. Dispositif selon la revendication 31, **caractérisé en ce que** le moteur d'entraînement peut être commandé automatiquement par l'intermédiaire du dispositif de capteur après une collision.

33. Dispositif selon l'une quelconque des revendications 1 à 32, **caractérisé en ce que** le ressort de levage (20), dans l'état détendu, peut être comprimé par le capot avant (12), comme ressort amortisseur.

34. Véhicule automobile (10), **caractérisé par** un dispositif de protection de personnes en cas de collision selon l'une quelconque des revendications précédentes.
